# EUROPEAN PATENT APPLICATION

(11) **EP 2 797 062 A1**
(43) Date of publication of application: **29.10.2014**
(21) Application number: 13198439.5
(22) Date of filing: 19.12.2013
(51) Int. Cl.: G08C 17/02

(54) **Control system**

(30) Priority: 26.04.2013 JP 2013094614
(71) Applicant: Toshiba Lighting & Technology Corporation, Yokosuka-shi, Kanagawa 237-8510 (JP)
(72) Inventor: Noguchi, Yoko, Kanagawa, 237-8510 (JP); Sasai, Toshihiko, Kanagawa, 237-8510 (JP); Takahashi, Toshiaki, Kanagawa, 237-8510 (JP)
(74) Representative: Willquist, Sofia Ellinor

(57) **Abstract**

According to one embodiment, a control system (1) includes an electric apparatus (30) and a control unit (130, 230, 330). The electric apparatus (30) operates in a first mode which is controlled based on an instruction from a user and in a second mode in which operational status is automatically managed. The control unit (130, 230, 330) disables the second mode when receiving an instruction to disable the second mode and operates the electric apparatus (30), which operates in the first mode and the second mode, in the first mode.

## Description

### FIELD

Embodiments described herein relate generally to a control system.

### BACKGROUND

In recent years, a home network system is known which is capable of remote control of an electric apparatus disposed in the home. The electric apparatus within the home network system is not only controlled in accordance with an instruction of a user, but operational status thereof may be automatically managed by an external device. Generally, whether or not the electric apparatus is automatically managed is often decided in advance when introducing the home network system. Currently in a field of the home network system, a technology enabling a user to change whether or not to automatically manage the electric apparatus is yet to be known.

### BRIEF DESCRIPTION OF THE DRAWINGS

FIG. 1 is a view illustrating a configuration example of a control system according to a first embodiment.
FIG. 2 is a view illustrating a configuration example of a control device according to the first embodiment.
FIG. 3 is a view illustrating an example of a power consumption storage section according to the first embodiment.
FIG. 4 is a view illustrating an example of a setting information storage section according to the first embodiment.
FIG. 5 is a view illustrating an example of an operation mode storage section according to the first embodiment.
FIG. 6 is an explanatory view illustrating an example of automatic management by an operating control section according to the first embodiment.
FIG. 7 is a flow chart illustrating a procedure of automatic mode changing by the control device according to the first embodiment.
FIG. 8 is a view illustrating another configuration example of a control device according to a second embodiment.
FIG. 9 is a view illustrating an example of a relevant information storage section according to the second embodiment.
FIG. 10 is a flow chart illustrating another procedure of automatic mode changing by the control device according to the second embodiment.
FIG. 11 is a view illustrating yet another configuration example of a control device according to a third embodiment.
FIG. 12 is a flow chart illustrating yet another procedure of automatic mode changing by the control device according to the third embodiment.

### DETAILED DESCRIPTION

A control system 1 according to one embodiment described below includes an electric apparatus 30 and a control unit 130, 230 or 330. The electric apparatus 30 operates in a first mode (corresponding to manipulation mode) which is controlled based on an instruction from a user and in a second mode (corresponding to automatic mode) in which operational status is automatically managed. The control unit 130, 230 or 330 disables the second mode when receiving an instruction to disable the second mode and operates the electric apparatus 30 which operates in the first mode and the second mode, in the first mode.

The control unit 130, 230 or 330 according to the embodiment described below enables the second mode when receiving an instruction to enable the second mode and operates the electric apparatus 30 in the first mode and the second mode.

The electric apparatus 30 according to the embodiment described below operates in the first mode with priority over the operating in the second mode when the second mode is enabled.

The control system 1 according to the embodiment described below includes a plurality of electric apparatuses 30. At least one or more second electric apparatuses 30 other than the first electric apparatus 30 among the plurality of electric apparatuses 30 operate in a state where the second mode is disabled or enabled, similar to the first electric apparatus 30 when the second mode is disabled or enabled in the first electric apparatus 30 by the control unit 130, 230 or 330.

In the control system 1 according to the embodiment described below, at least one or more second electric apparatuses 30 other than the first electric apparatus 30 among the plurality of electric apparatuses 30 operate based on the operational status of the first electric apparatus 30 in a state where the second mode is enabled in the second electric apparatus 30 when the second mode is disabled in the first electric apparatus 30 by the control unit 130, 230 or 330.

The control unit 130, 230 or 330 according to the embodiment described below controls the state of the second electric apparatus 30 when the second mode is disabled or enabled in the first electric apparatus 30.

The first electric apparatus 30 according to the embodiment described below has the control unit 130, 230 or 330. The control unit 130, 230 or 330 directly transmits a notice of a change in the second mode to the second electric apparatus 30 to control the state of the second electric apparatus 30 when the second mode is disabled or enabled in the first electric apparatus 30.

The control system 1 according to the embodiment described below includes a relevant information storage section 224 that stores information indicating relevance to the plurality of electric apparatuses 30. The control unit 230 controls the state of the second electric apparatus 30 that has a relationship with the first electric apparatus 30 based on the information which is stored in the relevant information storage section 224 when the second mode is disabled or enabled in the first electric apparatus 30.

The electric apparatus 30 according to the embodiment described below is disposed inside a predetermined building. The control unit 130, 230 or 330 cuts off an instruction that is transmitted from another user's terminal 3 which is located in a network outside the predetermined building after directly receiving the instruction to disable or enable the second mode from a user's terminal 20 used by the user.

The control unit 330 according to the embodiment described below enables the second mode in the electric apparatus 30 after elapsing a predetermined period, since the second mode is disabled in the electric apparatus 30.

The control unit 330 according to the embodiment described below enables the second mode in the electric apparatus 30 when power consumption reaches a predetermined value in the electric apparatus 30 after the second mode is disabled in the electric apparatus 30.

The control unit 330 according to the embodiment described below enables the second mode in the electric apparatus 30 when an amount of power supplied in a predetermined area that is provided by an electric power company supplying electricity reaches a predetermined value.

The control unit 330 according to the embodiment described below notifies the user of enablement of the second mode in the electric apparatus 30 when the second mode is enabled in the electric apparatus 30.

Hereinafter, with reference to the drawings, a control system according to embodiments will be described. In the embodiment, the same reference numerals represent the same components, and thus description thereof is not repeated.

### First Embodiment

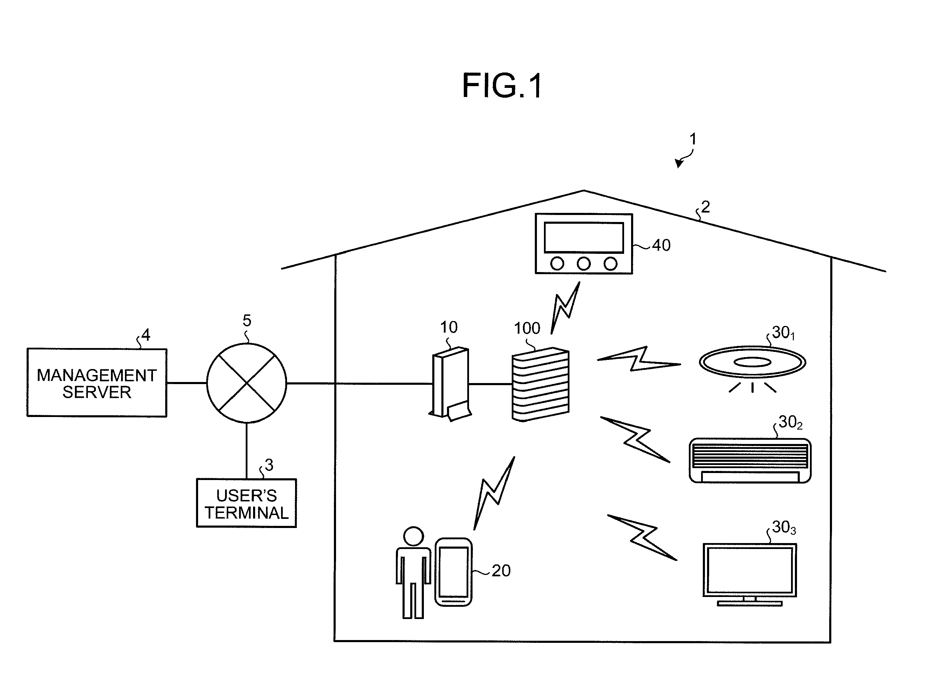

First, with reference to FIGS. 1 to 7, the control system according to a first embodiment will be described.

### Configuration of Control System

FIG. 1 is a view illustrating a configuration example of the control system 1 according to the first embodiment. The control system 1 illustrated in FIG. 1 is a system that realizes controlling and monitoring of household electric appliances disposed in the home. The control system 1 is, for example, sometimes called a home energy management system (HEMS). In addition, as an example, "ECHONET Lite" of a HEMS standard protocol is sometimes applied to the control system 1.

The control system 1 illustrated in FIG. 1 has a home network system 2, a user's terminal 3 and a management server 4. The home network system 2, the user's terminal 3 and the management server 4 are communicatively connected to each other by wire or wirelessly via a network 5. The network 5, for example, corresponds to the internet or an intranet. The number of the home network system 2, the user's terminal 3 and the management server 4 illustrated in FIG. 1 is merely an example, thereby being appropriately changeable in accordance with the configuration of the control system 1.

The home network system 2 is installed in a predetermined building such as in a home or a store and includes a gateway device 10, the user's terminal 20, electric apparatuses 30₁ to 30₃, an electric power measurement device 40 and a control device 100. The number of the electric apparatuses 30₁ to 30₃ illustrated in FIG. 1 is merely an example, thereby being appropriately changeable in accordance with the configuration of the home network system 2.

The gateway device 10 connected to the control device 100 is a communication apparatus that communicatively connects the home network system 2 to the network 5 outside.

The user's terminal 20 is, for example, a remote controller, a tablet terminal, a personal computer (PC), a mobile phone, a personal data assistant (PDA) and the like. The user's terminal 20 can communicate with the control device 100 via wireless local area network (LAN), wired LAN and the like. For example, the user's terminal 20 can transmit a control command for controlling the operating of the electric apparatuses 30₁ to 30₃ to the control device 100 in accordance with a user's manipulation.

The electric apparatuses 30₁ to 30₃ are electric appliances disposed in the home. In a case of examples in FIG. 1, the electric apparatus 30₁ is, for example, a lighting apparatus; the electric apparatus 30₂ is, for example, a cooling and heating apparatus; and the electric apparatus 30₃ is, for example, a television set. The electric apparatus, without being limited to the example in FIG. 1, may be a home appliance such as an air conditioning apparatus, a laundry machine, a water heater, an electric lock, an intercommunication system (door intercom); and an audio-visual apparatus such as a television recorder. In addition, the electric apparatus may be an amusement appliance such as a game machine; an information appliance such as a personal computer; and a solar power generation related apparatus. That is, the electric apparatus may be an ordinary household electric product in wide use. Hereinafter, if it is not necessary to classify the electric apparatuses 30₁ to 30₃, they may be simply referred to as an "electric apparatus 30".

The electric power measurement device 40 measures an amount of in-home power consumption. Specifically, the electric power measurement device 40 is connected to a distribution board (not illustrated) disposed in the home. For example, the electric power measurement device 40 measures amperage flowing through a branch circuit for a power distribution line in the distribution board and a power source that supplies electric power to each electric apparatus 30 in the home, thereby measuring the power consumption of each electric apparatus 30 from the measured amperage. The electric power measurement device 40 transmits the amount of the power consumption of each electric apparatus 30 to the control device 100.

The control device 100 functions as an access point and communicates with the gateway device 10, the user's terminal 20 or the electric apparatus 30 through a short-range radio technology such as Bluetooth (registered trademark) or in-home LAN. The control device 100 may be integrally formed with the gateway device 10.

In addition, the control device 100 controls the operating of the electric apparatus 30. Specifically, if the control device 100 receives the control command from the user' s terminal 20, the control device 100 transmits the received control command to the electric apparatus 30. In this case, the electric apparatus 30 controls the operating of the apparatus itself (electric apparatus 30) in accordance with the control command received from the control device 100. For example, if the electric apparatus 30₁ which is a lighting apparatus receives a control command to turn on the power source, the electric apparatus 30₁ turns on the power source of the apparatus itself (electric apparatus 30₁). The control device 100 transmits a command (occasionally referred to as a telegraphic message) generated based on the control command received from the user's terminal 20 to the electric apparatus 30. However, hereinafter, a command which is transmitted from the control device 100 will be also described as the control command.

In this manner, a user who uses the home network system 2 can control the electric apparatus 30 via the control device 100 by using the user's terminal 20. For example, if the user' s terminal 20 is a mobile phone, a user can remotely control the operating of the plurality of electric apparatuses 30 by simply manipulating the mobile phone in the home.

In addition, in FIG. 1, the user's terminal 3 illustrated outside the home network system 2 is, for example, the mobile phone, a PDA, a tablet terminal, a PC and the like being connected to the network 5 by wireless or wire. The user's terminal 3, similar to the user's terminal 20, can transmit a control command with respect to the electric apparatus 30 to the management server 4 in accordance with the user's manipulation.

The management server 4 manages various pieces of information regarding the electric apparatus 30. In addition, if the management server 4 receives a control command from the user's terminal 3 via the network 5, the management server 4 transmits the received control command to the control device 100. Accordingly, the control device 100 in the home transmits the control command which is transmitted from the user's terminal 3 positioned outside the home network system 2 to the electric apparatus 30, thereby controlling the operating of the electric apparatus 30. In this manner, a user of the user' s terminal 3 can control the operating of the electric apparatus 30 even if the electric apparatus 30 is not present within the home network system 2.

Here, the electric apparatus 30 described above operates in two types of operation modes. Specifically, the electric apparatus 30, as described above, operates in a first operation mode (hereinafter, described as "manipulation mode") which is controlled by an instruction from the user's terminal 20 or the user's terminal 3. Moreover, the electric apparatus 30, regardless of the instruction from the user, may perform the operating in a second operation mode (hereinafter, described as "automatic mode") in which the operational status is automatically managed by the control device 100 or the management server 4.

To describe the automatic mode, the control device 100, regardless of whether or not the control device 100 receives the control command from the user's terminal 20 and the like, may generate a control command for controlling the electric apparatus 30 which operates in the automatic mode. The control device 100 transmits the generated control command to the electric apparatus 30, thereby controlling the operating of the electric apparatus 30. For example, the control device 100 may control the operating of the electric apparatuses 30₁ to 30₃ so as to cause the total in-home power consumption to become a predetermined value or less. In addition, the control device 100 may turn on the power source of the electric apparatus 30₁ that is a lighting device on a predetermined date and at a predetermined time and may change intensity of illumination of the electric apparatus 30₁ to a predetermined value on a predetermined date and at a predetermined time. Such an automatic management of the electric apparatus 30 by the control device 100 is carried out based on setting information that is set in advance, schedule information and the like.

In two types of the operation modes, the manipulation mode in which a user can compulsorily operate the electric apparatus 30 is enabled at all times. However, the automatic mode is occasionally enabled or disabled. That is, when the automatic mode is enabled, the electric apparatus 30 operates in both the manipulation mode and the automatic mode, and when the automatic mode is disabled, the electric apparatus 30 operates only in the manipulation mode. In addition, if the electric apparatus 30 operates in both the manipulation mode and the automatic mode, the electric apparatus 30 operates in the manipulation mode with priority over the automatic mode. For example, in a state of being controlled by the control device 100 to set the intensity of illumination to a predetermined value X1, if the electric apparatus 30₁ receives a control command from the user's terminal 20 to set the intensity of illumination to a predetermined value X2 (≠ X1), the electric apparatus 30₁ changes the intensity of illumination to the predetermined value X2. Accordingly, the electric apparatus 30 can perform the operating in accordance with an intention of a user at all times.

Generally, whether the automatic mode is enabled or disabled is often decided in advance when introducing the home network system 2, and it is not possible for a user to change this flexibly. However, the control device 100 according to the first embodiment allows a user to change a setting state of the automatic mode between the enabled state and the disabled state. In simple terms, the control device 100 receives an instruction (command for changing the automatic mode state described below) from the user's terminal 20 or the user's terminal 3 to change the automatic mode to either a disabled or an enabled state. Then, in accordance with the received instruction, the control device 100 changes the automatic mode in the electric apparatus 30 to either the disabled or the enabled state. Hereinafter, the aforementioned control device 100 will be described.

In the above example, the example shows that the control device 100 automatically manages the electric apparatus 30. However, the management server 4 may automatically manage the electric apparatus 30. In addition, even if the management server 4 automatically manages the electric apparatus 30, the control device 100 may download a process program or the setting information from the management server 4 in order to automatically manage the electric apparatus 30 and automatically manage the electric apparatus 30 based on the downloaded information. In the following description, the control device 100 automatically manages the electric apparatus 30.

### Configuration of Control Device

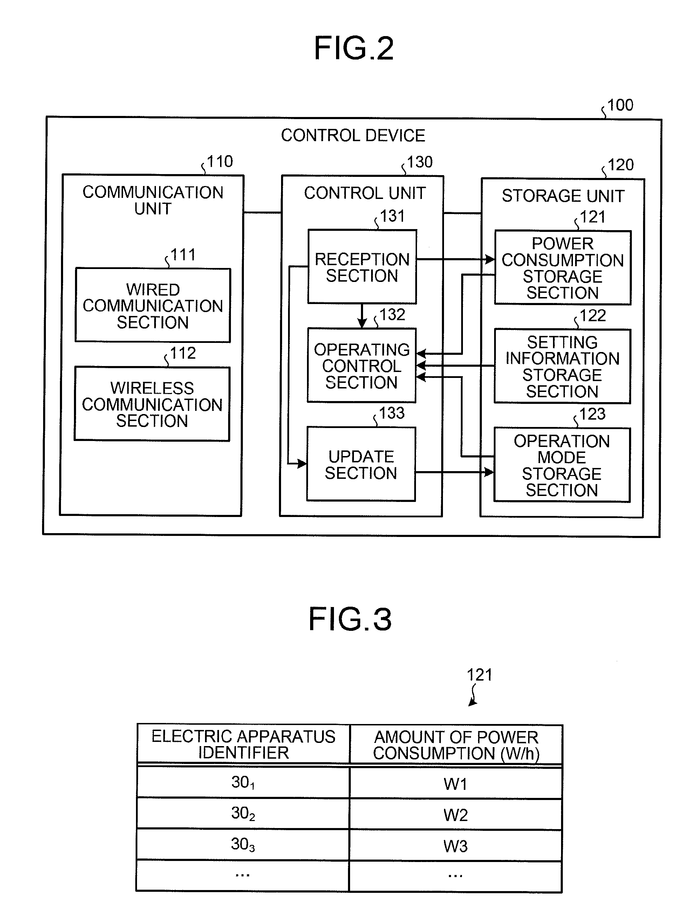

FIG. 2 is a view illustrating a configuration example of the control device 100 according to the first embodiment. As illustrated in FIG. 2, the control device 100 has a communication unit 110, a storage unit 120 and a control unit 130.

The communication unit 110 is connected to the gateway device 10, the user's terminal 20, the electric apparatus 30, the electric power measurement device 40 and the like and performs communication with these devices. As illustrated in FIG. 2, the communication unit 110 has a wired communication section 111 performing wired communication and a wireless communication section 112 performing wireless communication.

The wired communication section 111 is, for example, realized by a connection port into which a LAN cable is inserted, a communication circuit or the like. The wired communication section 111 is connected to apparatuses that perform wired communication with the control device 100 among each of the apparatuses disposed in the home. The wireless communication section 112 is, for example, realized by a transceiver that transmits and receives infrared rays or radio waves, the communication circuit or the like. The wireless communication section 112 is connected to apparatuses that perform wireless communication with the control device 100 among each of the apparatuses disposed in the home.

The storage unit 120 is, for example, realized by a storage device such as a semiconductor memory element similar to a random access memory (RAM), a flash memory and the like. As illustrated in FIG. 2, the storage unit 120 has a power consumption storage section 121, a setting information storage section 122 and an operation mode storage section 123.

The power consumption storage section 121 stores the amount of the power consumption of the electric apparatus 30 for each of the electric apparatuses 30. FIG. 3 illustrates an example of the power consumption storage section 121 according to the first embodiment. The power consumption storage section 121 illustrated in FIG. 3 stores the "amount of the power consumption" corresponding to an "electric apparatus identifier". The "electric apparatus identifier" indicates identification information to identify the electric apparatus 30. FIG. 3 illustrates an example that a reference numeral applied to the electric apparatus in FIG. 1 corresponds to the electric apparatus identifier. For example, the electric apparatus identifier of the electric apparatus 30₁ is "30₁". The "amount of the power consumption" indicates an amount of the power consumption of the electric apparatus 30. In the "amount of the power consumption" illustrated in FIG. 3, an amount of the power consumption during the last hour is stored. However, without being limited to this example, as the "amount of the power consumption", an amount of the power consumption during another latest period besides one hour (for example, half an hour, three hours, 12 hours, one day and the like) may be stored. Electric power information stored in the power consumption storage section 121 is provided from the electric power measurement device 40 illustrated in FIG. 1.

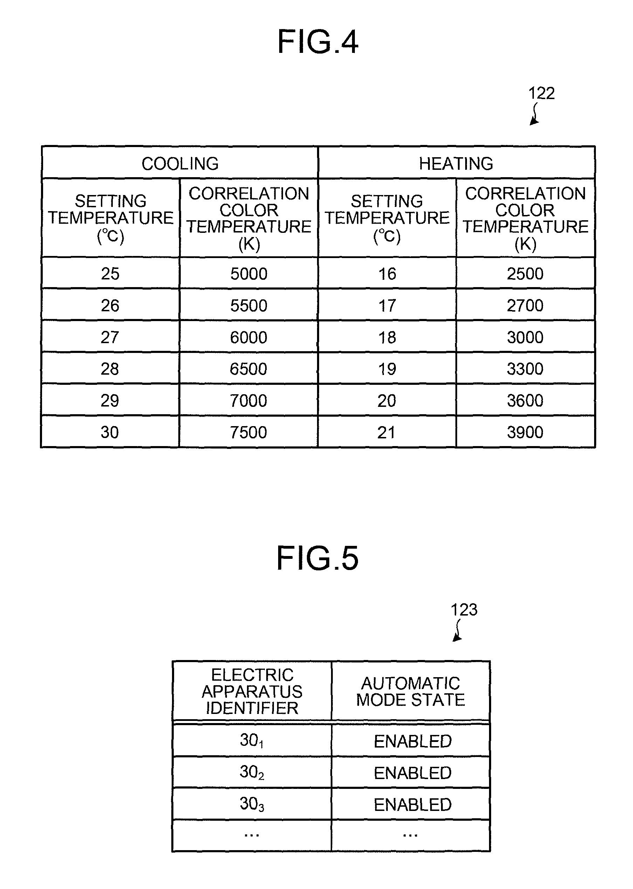

The setting information storage section 122 stores setting information used for the automatic management of the electric apparatus 30. FIG. 4 illustrates an example of the setting information storage section 122 according to the first embodiment. FIG. 4 illustrates an example of the setting information used when the electric apparatus 30₁ that is the lighting device and the electric apparatus 30₂ that is the cooling and heating apparatus are linked together to be automatically managed. The setting information storage section 122 illustrated in FIG. 4 stores a "setting temperature" and a "correlation color temperature" respectively corresponding to "cooling" and "heating". The "setting temperature" denotes a temperature set in the cooling and heating apparatus. The "correlation color temperature" denotes a color temperature set in the lighting device. In the setting information storage section 122, various pieces of information are set in advance based on clinical data indicating a relationship between an effective temperature and the color temperature. An automatic management using the setting information storage section 122 will be subsequently described.

The operation mode storage section 123 stores information indicating whether the automatic mode in the electric apparatus 30 is enabled or disabled for each electric apparatus 30. FIG. 5 illustrates an example of the operation mode storage section 123 according to the first embodiment. The operation mode storage section 123 illustrated in FIG. 5 stores an "automatic mode state" corresponding to the "electric apparatus identifier". The "electric apparatus identifier" corresponds to the electric apparatus identifier illustrated in FIG. 3. The "automatic mode state" indicates whether the automatic mode in the electric apparatus 30 is enabled or disabled. That is, FIG. 5 illustrates an example in which the automatic mode is enabled for all the electric apparatuses 30₁ to 30₃ disposed in the home.

The control unit 130 is, for example, realized by an integrated circuit such as an application specific integrated circuit (ASIC), a field programmable gate array (FPGA) and the like. In addition, the control unit 130 is, for example, realized by executing a program that is stored in a storage device inside the control device 100 having RAM as a working region through a central processing unit (CPU), a micro processing unit (MPU) and the like. The control unit 130 has a reception section 131, an operating control section 132 and an update section 133.

The reception section 131 receives various pieces of information from the user's terminal 20, the electric power measurement device 40 and the management server 4 via the communication unit 110. For example, the reception section 131 receives an amount of power consumption of each electric apparatus 30 from the electric power measurement device 40. In this case, the reception section 131 updates the power consumption storage section 121 based on the amount of the power consumption received from the electric power measurement device 40. The reception section 131 may acquire the amount of the power consumption by requiring to the electric power measurement device 40. The reception section 131 regularly (for example, once an hour) updates the power consumption storage section 121.

In addition, for example, the reception section 131 receives a control command from the user's terminal 20 or receives a control command from the user's terminal 3 via the management server 4. In this case, the reception section 131 outputs the received control command to the operating control section 132.

In addition, the reception section 131 according to the first embodiment receives the command for changing the automatic mode state to change the automatic mode in the electric apparatus 30 to either the disabled state or the enabled state. Specifically, the reception section 131 sometimes receives the command for changing the automatic mode state from the user's terminal 20 and sometimes receives the command for changing the automatic mode state from the user's terminal 3 via the management server 4. If the reception section 131 receives the command for changing the automatic mode state from the user's terminal 20 and the like, the reception section 131 outputs the received command for changing the automatic mode state to the update section 133.

The command for changing the automatic mode state received by the reception section 131 includes the electric apparatus identifier of the electric apparatus 30 and information indicating either a disablement or an enablement. For example, the user's terminal 20 and the user's terminal 3 allow a user to select the electric apparatus 30 to be changed in the automatic mode state and to select either the disabled state or enabled state of the automatic mode state to be changed. Then, in accordance with a selection manipulation by the user, the user's terminal 20 and the user's terminal 3 transmit the command for changing to the automatic mode state including the electric apparatus identifier of the electric apparatus 30 that is subject to be changed and the information indicating either the disabled or the enabled state to the control device 100.

The operating control section 132 controls the operating of the electric apparatus 30. Specifically, the operating control section 132 transmits a control command input from the reception section 131 to the electric apparatus 30 that is subject to be controlled. As described above, since the manipulation mode in the electric apparatus 30 is enabled at all times, the operating control section 132 unconditionally transmits the control command input from the reception section 131 to the electric apparatus 30. Accordingly, the electric apparatus 30 controls the operating of the apparatus itself (electric apparatus 30) in accordance with the control command received from the operating control section 132. That is, the electric apparatus 30 is controlled in accordance with the user's manipulation.

In addition, the operating control section 132 controls the operating of the electric apparatus 30 based on various pieces of information which are stored in the operation mode storage section 123. Specifically, among each of the electric apparatuses 30 disposed in the home, the operating control section 132 specifies the electric apparatus 30 indicating that the "automatic mode state" that is stored in the operation mode storage section 123 is enabled. Then, the operating control section 132 controls the operating of the electric apparatus 30 with the automatic mode enabled based on various pieces of information which are stored in the power consumption storage section 121 and the setting information storage section 122.

A process performed by the operating control section 132 will be described with reference to an example in FIG. 3. Here, the operating control section 132 holds the setting information such that "the total amount of the power consumption per hour is a predetermined value W10 or less". In this case, the operating control section 132 acquires all the amounts of the power consumption "W1", "W2" and "W3" from the power consumption storage section 121 and adds the acquired amounts of the power consumption to calculate the total amounts of the power consumption "W1 + W2 + W3" per hour. Then, if the calculated total amounts of the power consumption "W1 + W2 + W3" is the predetermined value W10 or less, the operating control section 132 does not control the electric apparatuses 30₁ to 30₃. In contrast, if the total amounts of the power consumption "W1 + W2 + W3" is more than the predetermined value W10, the operating control section 132 controls the electric apparatuses 30₁ to 30₃ so as to reduce the power consumption. For example, the operating control section 132 lowers the intensity of illumination of the electric apparatus 30₁ that is the lighting device or changes an operation mode of the electric apparatus 30₂ that is the cooling and heating apparatus to a weak mode. The operating control section 132 can realize in-home energy-saving by performing such a process at a predetermined frequency (for example, for every hour).

Subsequently, another process by the operating control section 132 will be described with reference to an example in FIG. 4. Here, the automatic modes in the electric apparatuses 30₁ and 30₂ are enabled. For example, if the electric apparatus 30₂ that is the cooling and heating apparatus operates at "cooling" and "setting temperature of 29 (°C)", the operating control section 132 acquires the correlation color temperature of "7,000 (K)" from the setting information storage section 122. Then, the operating control section 132 controls the electric apparatus 30₁ that is the lighting device so as to have the color temperature of "7,000 (K)". In addition, for example, if the electric apparatus 30₂ operates at "heating" and "setting temperature of 17 (°C)", the operating control section 132 acquires the correlation color temperature of "2,700 (K)" from the setting information storage section 122. Then, the operating control section 132 controls the electric apparatus 30₁ so as to have the color temperature of "2,700 (K)".

A reason for controlling the electric apparatuses 30₁ and 30₂ as in the above-described example will be described. Generally, as the color temperature of the lighting device becomes high, the effective temperature for humans is low, and as the color temperature of the lighting device becomes low, the effective temperature for humans is high. That is, in a case of the example in FIG. 4, in the operating control section 132, as a setting temperature for cooling becomes high, the color temperature of the lighting device is set to be high, and thus, it is possible to lower the effective temperature of a user even if a room temperature is high. In addition, the operating control section 132 sets the color temperature of the lighting device low as the setting temperature of heating becomes low, and thus, even if the room temperature is low, it is possible to set the effective temperature of a user high. In this manner, the operating control section 132 utilizes the color temperature that affects the effective temperature of a user, and thus, it is possible to realize energy saving of the cooling and heating apparatus.

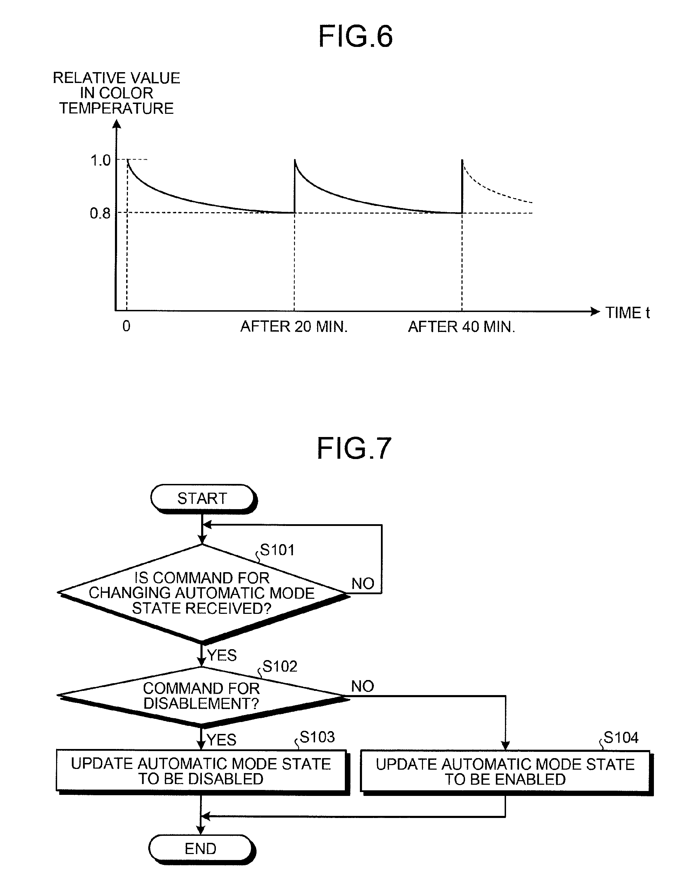

The control with respect to the electric apparatuses 30₁ and 30₂ by the operating control section 132 is not limited to the example described above. Specifically, in general, if illumination is continued at the same color temperature, since a human's senses become accustomed thereto, an influence of the color temperature on the effective temperature tends to fade. Therefore, the operating control section 132 may change the color temperature to a degree at which a user does not feel uncomfortable. In this regard, a description will be given with reference to FIG. 6. In an example of FIG. 6, the operating control section 132 firstly sets the color temperature acquired from the setting information storage section 122 as an initial value of the color temperature in the electric apparatus 30₂. Then, the operating control section 132 gradually changes the color temperature of the electric apparatus 30₂ to 80% of the initial value so as not to be recognized by a user, and the color temperature returns to the initial value thereafter. In a case of FIG. 6, the operating control section 132 performs such a control at an interval of 20 minutes. Accordingly, the operating control section 132 can cause a user to confirm a change in the color temperature every 20 minutes, and thus, it is possible to feel warmer or cooler than an actual room temperature.

In addition, the operating control section 132 may automatically manage the electric apparatus 30 based on information provided by the electric apparatus 30. For example, in the electric apparatus 30₁ that is the lighting device, a human detection sensor that detects the presence of a human may be provided. The human detection sensor of the electric apparatus 30₁ may notify the control device 100 of the situation when the presence of a human is detected or when the absence of the human who has been present is detected. At this time, the operating control section 132 of the control device 100 may turn on the power source of the electric apparatus 30₁ when a notification of detecting the presence of a human is received, and may turn off the power source of the electric apparatus 30₁ when a notification of detecting the absence of a human is received.

The update section 133 updates the automatic mode to be in a disabled or enabled state in the electric apparatus 30. Specifically, if the command for changing the automatic mode state input from the reception section 131 is a command causing the automatic mode to be in the disabled state, the update section 133 updates the automatic mode state that is stored in the operation mode storage section 123 corresponding to the electric apparatus identifier included in the command for changing the automatic mode state to be disabled. Accordingly, the automatic management with respect to the electric apparatus 30 by the operating control section 132 becomes disabled. Meanwhile, if the command for changing the automatic mode state is a command causing the automatic mode to be in the enabled state, the update section 133 updates the automatic mode state that is stored in the operation mode storage section 123 to be enabled. Accordingly, the automatic management with respect to the electric apparatus 30 by the operating control section 132 is enabled.

In this manner, the update section 133 changes the automatic mode to be in the disabled or enabled state in the electric apparatus 30 based on the command for changing the automatic mode state transmitted from the user's terminal 20 and the user's terminal 3 in accordance with the user's manipulation. That is, in the control device 100 according to the first embodiment, a user can flexibly change the automatic mode state in the electric apparatus 30.

### Procedure of Process by Control Device

FIG. 7 is a flow chart illustrating a procedure of automatic mode changing by the control device 100 according to the first embodiment. As illustrated in FIG. 7, if automatic mode changing is performed, the reception section 131 of the control device 100 determines whether or not the command for changing the automatic mode state is received (Act 101). Then, if the command for changing the automatic mode state is not received (Act 101 is NO), the reception section 131 stands by until receiving the command for changing the automatic mode state.

Meanwhile, if the command for changing the automatic mode state is received by the reception section 131 (Act 101 is YES), the update section 133 determines whether or not the command for changing the automatic mode state is a command causing the automatic mode state to be disabled (Act 102).

Then, in a case of the command causing the automatic mode state to be disabled (Act 102 is YES), the update section 133 updates the automatic mode state corresponding to the electric apparatus identifier that is included in the command for changing the automatic mode state among the automatic mode states stored in the operation mode storage section 123 to be disabled (Act 103).

Meanwhile, in a case of the command causing the automatic mode state to be enabled (Act 102 is NO), the update section 133 updates the automatic mode state corresponding to the electric apparatus identifier that is included in the command for changing the automatic mode state among the automatic mode states stored in the operation mode storage section 123 to be enabled (Act 104).

### Effect of First Embodiment

As described above, if the command for changing the automatic mode state which is transmitted from the user's terminal 20 and the user's terminal 3 is received, the control device 100 according to the first embodiment changes the automatic mode state to be disabled or enabled in the electric apparatus 30 in accordance with the received command for changing the automatic mode state. Therefore, a user can flexibly change the automatic mode state in the electric apparatus 30 by the control device 100 according to the first embodiment.

For example, when desiring the energy saving, a user can enable the automatic mode in the electric apparatus 30. In addition, when desiring to appropriately operate the electric apparatus 30 without being affected by the automatic management of the control device 100, a user can disable the automatic mode in the electric apparatus 30. Therefore, a user can flexibly change the automatic mode in the electric apparatus 30 such as by disabling the automatic mode only for a particular time band while enabling the automatic mode during other time bands besides the particular time band (for example, being away from home, being asleep and the like). In this manner, the control device 100 according to the first embodiment, it is possible to provide the home network system 2 capable of freely setting the automatic mode, and thus, it is possible to improve a user's satisfaction.

### Modification Example

In the first embodiment, in consideration of the operational status of the electric apparatus 30 of which the automatic mode is disabled by the update section 133, the operating control section 132 may automatically manage other electric apparatuses 30 besides the aforementioned electric apparatus 30. For example, the automatic mode in the electric apparatus 30₁ is disabled among the electric apparatuses 30₁ to 30₃. In this case, taking the operational status of the electric apparatus 30₁ into consideration, the operating control section 132 may automatically manage the electric apparatuses 30₂ and 30₃.

In this regard, a description will be given exemplifying the amount of the power consumption. For example, if the automatic mode is disabled, the electric apparatus 30₁ is controlled based on the user's manipulation only. Therefore, there is a possibility that the power consumption of the electric apparatus 30₁ may increase. In this case, the operating control section 132 may monitor the power consumption of the electric apparatus 30₁ of which the automatic mode is disabled, thereby controlling the operating of the electric apparatuses 30₂ and 30₃ so as to acquire an increased amount (for example, an additional 5 W/h) of the power consumption in the electric apparatus 30₁ and reduce the increased amount of the acquired power consumption. Accordingly, even if the automatic mode is disabled in the electric apparatus 30, the operating control section 132 can prevent the total power consumption in the home in its entirety from excessively increasing.

### Second Embodiment

The first embodiment describes the example in which the automatic mode is changed in the electric apparatus 30 that is designated through the command for changing the automatic mode state. In a second embodiment, an example will be described in which the automatic mode is changed in other electric apparatuses 30 linked to the electric apparatus 30 designated through the command for changing the automatic mode state.

### Configuration of Control Device

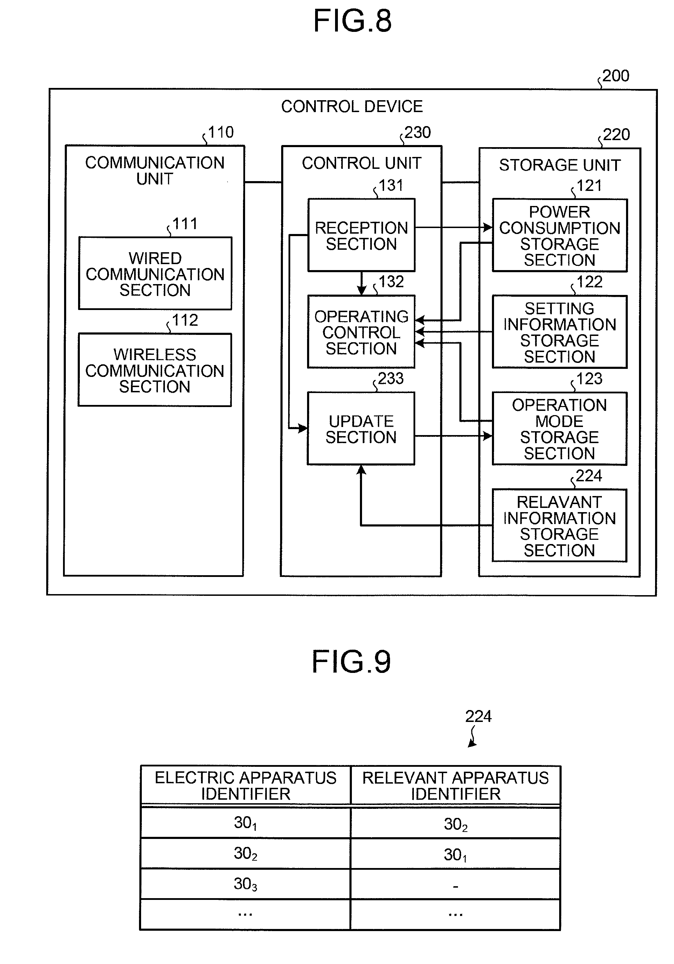

FIG. 8 is a view illustrating another configuration example of a control device 200 according to the second embodiment. The control device 200 corresponds to the control device 100 illustrated in FIG. 1. As illustrated in FIG. 8, the control device 200 has a storage unit 220 and a control unit 230. The storage unit 220 has a relevant information storage section 224. In addition, the control unit 230 has an update section 233.

The relevant information storage section 224 stores information indicating relevance of the electric apparatuses 30 included in the home network system 2. FIG. 9 illustrates an example of the relevant information storage section 224 according to the second embodiment. The relevant information storage section 224 illustrated in FIG. 9 stores a "relevant apparatus identifier" corresponding to an "electric apparatus identifier". The "electric apparatus identifier" corresponds to the electric apparatus identifier illustrated in FIGS. 3 and 5. The "relevant apparatus identifier" denotes an electric apparatus identifier of other electric apparatuses having relevance with the electric apparatus that is identified by the "electric apparatus identifier". That is, FIG. 9 illustrates an example in which the electric apparatus 30₁ and the electric apparatus 30₂ are relevant to each other. In addition, FIG. 9 illustrates an example in which there is no other electric apparatus relevant to the electric apparatus 30₃.

Such relevant information storage section 224 is set with various pieces of information in advance by a user when introducing the home network system 2. However, the control device 200 may update the information stored in the relevant information storage section 224 in accordance with a command from the user's terminal 20 and the like, even after the home network system 2 is introduced.

The update section 233 updates the automatic mode to be disabled or enabled in the electric apparatus 30 similar to the update section 133 according to the first embodiment. However, the update section 233 according to the second embodiment also updates the automatic mode in other electric apparatuses 30 relevant to the electric apparatus 30 designated through the command for changing the automatic mode state based on the relevant information that is stored in the relevant information storage section 224.

Specifically, the update section 233 acquires the relevant apparatus identifier which corresponds to the electric apparatus identifier included in the command for changing the automatic mode state, from the relevant information storage section 224. Then, the update section 233 updates the automatic mode state corresponding to the electric apparatus identifier included in the command for changing the automatic mode state and the automatic mode state corresponding to the relevant apparatus identifier acquired from the relevant information storage section 224 among the automatic mode states that is stored in the operation mode storage section 123 in accordance with the command for changing the automatic mode state.

A process by the update section 233 will be described with reference to an example in FIG. 9. For example, the control device 200 receives the command for changing the automatic mode state to disable the automatic mode state of the electric apparatus 30₁. In this case, the update section 233 acquires a relevant apparatus identifier "30₂" corresponding to the electric apparatus identifier "30₁" from the relevant information storage section 224 illustrated in FIG. 9. Then, regarding the operation mode storage section 123 illustrated in FIG. 2, the update section 233 updates the automatic mode state corresponding to the electric apparatus identifier "30₁" to be disabled, and the update section 233 updates the automatic mode state corresponding to the electric apparatus identifier "30₂" to be disabled.

### Procedure of Process by Control Device

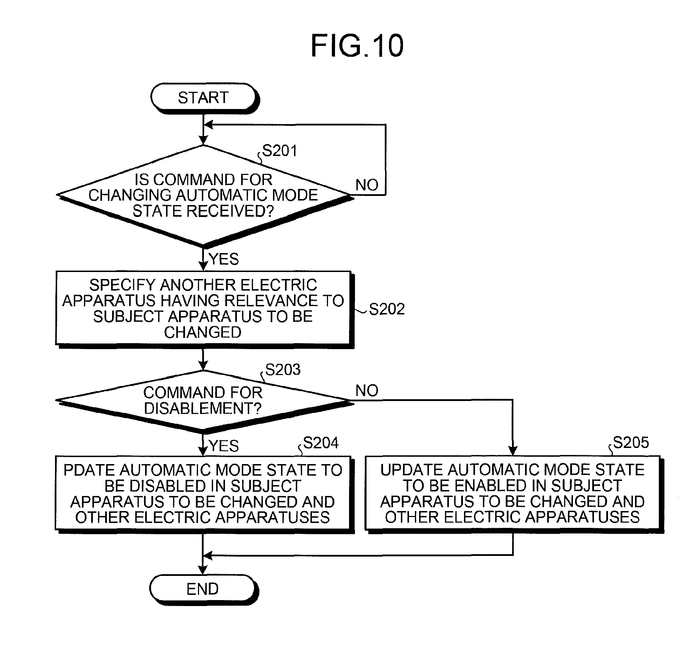

FIG. 10 is a flow chart illustrating another procedure of automatic mode changing by the control device 200 according to the second embodiment. As illustrated in FIG. 10, when receiving the command for changing the automatic mode state by the reception section 131 (Act 201 is YES), the update section 233 of the control device 200 specifies other electric apparatuses 30 having relevance to the electric apparatus 30 that is subject to be changed through the command for changing the automatic mode state based on the information stored in the relevant information storage section 224 (Act 202).

Subsequently, the update section 233 determines whether or not the command for changing the automatic mode state is a command to disable the automatic mode (Act 203). Then, in a case of the command to disable the automatic mode (Act 203 is YES), the update section 233 updates the automatic mode state corresponding to the electric apparatus 30 that is subject to be changed through the command for changing the automatic mode state and updates the automatic mode state corresponding to other electric apparatuses 30 specified in Act 202 to be disabled (Act 204).

Meanwhile, in a case of the command to enable the automatic mode (Act 203 is NO), the update section 233 updates the automatic mode state corresponding to the electric apparatus 30 that is subject to be changed and the automatic mode state corresponding to other electric apparatuses 30 specified in Act 202 to be enabled (Act 205).

### Effect of Second Embodiment

As described above, similar to the electric apparatus 30 designated in the command for changing the automatic mode state, the control device 200 according to the second embodiment also changes the automatic mode in other electric apparatuses 30 to be enabled or disabled. Therefore, in the control device 200 according to the second embodiment, a user can also change the automatic mode to be enabled or disabled in other electric apparatuses 30 by only manipulating for changing the automatic mode regarding one electric apparatus 30 among the plurality of electric apparatuses 30 disposed in the home.

For example, a user sets the relevant information storage section 224 so as to cause the plurality of electric apparatuses 30 disposed in the same room to have relevance to each other so that the automatic mode can be changed by one manipulation to be enabled or disabled in the plurality of electric apparatuses 30 disposed in the same room. As a result, the control device 200 according to the second embodiment can achieve improvement in usability, and thus, it is possible to improve a sense of satisfaction for a user.

### Modification Example 1

The above-described example shows an example that the update section 233 changes the automatic mode based on the relevant information storage section 224. However, the update section 233 may change the automatic mode by linking all the electric apparatuses 30. For example, when receiving the command for changing the automatic mode state to disable the automatic mode in the electric apparatus 30₁, the update section 233 may collectively disable the automatic mode not only in the electric apparatus 30₁ but also in all other electric apparatuses 30₂ and 30₃. Similarly, when receiving the command for changing the automatic mode state to enable the automatic mode, the update section 233 may collectively enable the automatic mode in all the electric apparatuses 30. In a case of this example, there is no need for the control device 200 to have the relevant information storage section 224.

### Modification Example 2

In addition, similar to the modification example in the first embodiment, in consideration of the operational status of the electric apparatus 30 of which the automatic mode is disabled, the operating control section 132 may automatically manage other electric apparatuses 30 besides the above-described electric apparatus 30. At this time, in consideration of the operational status of the electric apparatus 30 of which the automatic mode is disabled, the operating control section 132 according to the second embodiment may automatically manage only other electric apparatuses 30 having relevance to the above-described electric apparatus 30. For example, the relevant information storage section 224 is in a state illustrated in FIG. 9, and the automatic mode is disabled in the electric apparatus 30₁. In this case, in consideration of the operational status of the electric apparatus 30₁, the operating control section 132 may automatically manage the electric apparatus 30₂ having relevance to the electric apparatus 30₁. At this time, regarding the electric apparatus 30₃ with no relevance to the electric apparatus 30₁, the operating control section 132 does not perform the automatic management, taking the operational status of the electric apparatus 30₁ into consideration.

### Third Embodiment

The first and second embodiments describe the examples in which the automatic mode is enabled in accordance with the user's manipulation. In a third embodiment, an example in which the automatic mode is enabled without depending on the user's manipulation will be described.

### Configuration of Control Device

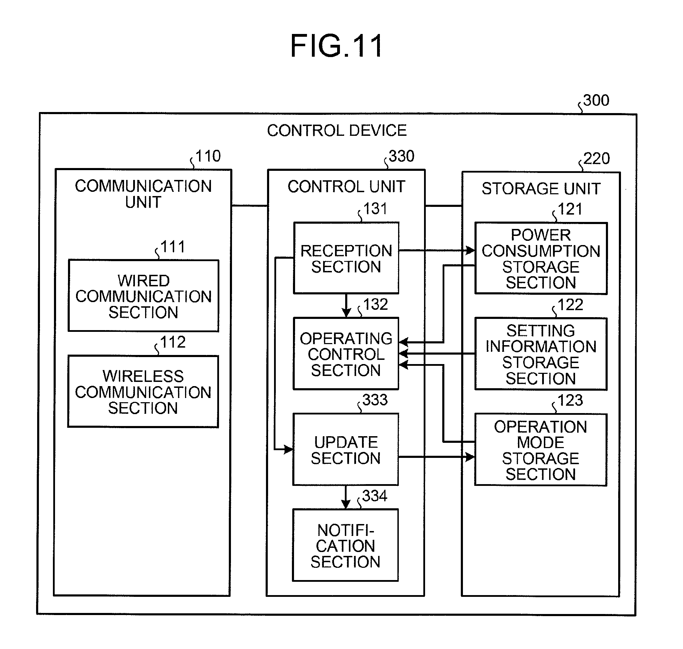

FIG. 11 is a view illustrating yet another configuration example of a control device 300 according to the third embodiment. The control device 300 corresponds to the control device 100 illustrated in FIG. 1. As illustrated in FIG. 11, the control device 300 has a control unit 330. The control unit 330 has an update section 333 and a notification section 334. In the third embodiment, an example in which the control device 100 illustrated in FIG. 2 performs a process by the update section 333 and the notification section 334 described below in addition to the process described in the first embodiment will be described. However, the process by the update section 333 and the notification section 334 may be applied to the control device 200 according to the second embodiment.

Even when receiving no command for changing the automatic mode state, if a predetermined condition is satisfied, the update section 333 enables the automatic mode in the electric apparatus 30. Specifically, if the automatic mode is disabled in the electric apparatus 30 in accordance with the command for changing the automatic mode state, the update section 333 measures an elapsed period from the time when the automatic mode is disabled. Then, if the measurement time reaches a predetermined time, the update section 333 enables the automatic mode in the electric apparatus 30.

When the update section 333 automatically enables the automatic mode without depending on the command for changing the automatic mode state, the notification section 334 notifies the user's terminal 20 and the user's terminal 3 of enablement of the automatic mode. At this time, the notification section 334 may also provide information (for example, name of electric appliance) that can identify the electric apparatus 30 of which the automatic mode is enabled.

### Procedure of Process by Control Device

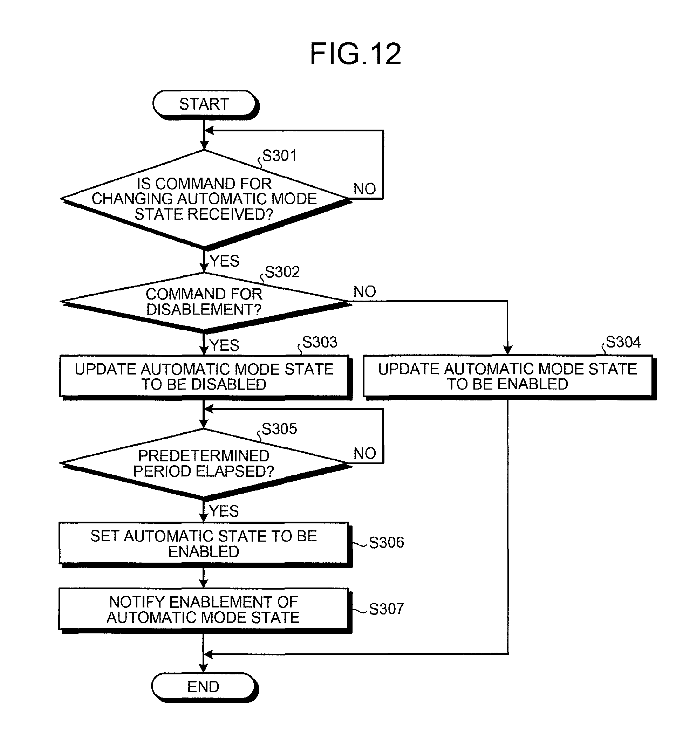

FIG. 12 is a flow chart illustrating yet another procedure of automatic mode changing by the control device 300 according to the third embodiment. Since the processing procedure of Acts 301 to 304 illustrated in FIG. 12 is identical to the processing procedure of Acts 101 to 104 illustrated in FIG. 7, the description thereof will be omitted.

As illustrated in FIG. 12, if the automatic mode state is disabled (Act 303), the update section 333 of the control device 300 starts measuring the elapsed period. Then, after elapsing a predetermined period since the automatic mode state is disabled (Act 305 is YES), the update section 333 updates the automatic mode state which is disabled in Act 303 (Act 306) to be enabled. Subsequently, the notification section 334 notifies the user's terminal 20 and the like of the automatic enablement of the automatic mode (Act 307).

### Effect of Third Embodiment

As described above, after elapsing a predetermined period since the automatic mode is disabled in accordance with a user's instruction, the control device 300 according to the third embodiment automatically enables the automatic mode. Therefore, in the control device 300 according to the third embodiment, it is possible to realize the energy saving. Specifically, since the electric apparatus 30 in the disabled automatic mode is controlled based on only the user's manipulation, there is a possibility of consuming a large amount of electric power. After elapsing a predetermined period since the automatic mode is disabled, the control device 300 according to the third embodiment enables the automatic mode so that it is possible to regulate the time in which the automatic mode is disabled. As a result, it is possible to prevent the power consumption from being excessively increased.

In addition, if the automatic mode is automatically enabled, the control device 300 according to the third embodiment notifies a user of the enablement of the automatic mode. Therefore, in the control device 300 according to the third embodiment, even if the automatic mode is enabled regardless of the user's manipulation, a user can recognize the state of the automatic mode.

### Modification Example

In the third embodiment, an example is described in which the automatic mode is automatically enabled under a condition of elapsing a predetermined period since the automatic mode is disabled. However, the update section 333 may automatically enable the automatic mode when other conditions are satisfied without the elapsed period as a condition.

For example, the update section 333 may automatically enable the automatic mode in the electric apparatus 30 of which the power consumption is a predetermined first threshold value or greater among the electric apparatuses 30 of which the automatic mode is disabled. Accordingly, even if the automatic mode is disabled by a user, the control device 300 can prevent the power consumption of the electric apparatus 30 from being excessively increased.

In addition, for example, if the total in-home power consumption is a predetermined second threshold value of greater, the update section 333 may partially or totally enable the automatic mode in the electric apparatuses 30 of which the automatic mode is disabled. Accordingly, even if the automatic mode is disabled by a user, the control device 300 can prevent the total power consumption in the home in its entirety from being excessively increased.

In addition, for example, the update section 333 may partially or totally enable the automatic mode in the electric apparatuses 30 of which the automatic mode is disabled based on information related to an electric power supply that is supplied from an electric power company. Specifically, for an individual predetermined area, the electric power company sometimes reports a power usage state in the area. The control device 300 may acquire the power usage state in each area reported by such an electric power company. Then, if an amount of the electric power consumption in the area where the user' s home is located is a predetermined third threshold value or more, the update section 333 may partially or totally enable the automatic mode in the electric apparatuses 30. Accordingly, the control device 300 may contribute to the energy saving for the whole area.

### Other Embodiments

Above-described control system 1 may be executed in various different types of embodiments in addition to the above-referenced embodiments. Hereinafter, another embodiment of the control system 1 will be described.

### Processing Body

The first to third embodiments described above illustrates examples in which the control device 100, 200 or 300 performs the automatic management or changing of the automatic mode of the electric apparatus 30. However, the management server 4, the user's terminal 20, the user's terminal 3 or the electric apparatus 30 itself may perform the changing of the automatic management or the automatic mode of the electric apparatus 30. It can be realized by causing the management server 4 and the like to have the storage unit 120 and the control unit 130 illustrated in FIG. 2, the storage unit 220 and the control unit 230 illustrated in FIG. 8 and the storage unit 120 and the control unit 330 illustrated in FIG. 11.

As a first example, the management server 4 has the storage unit 120 and the control unit 130 illustrated in FIG. 2. In this case, the management server 4 receives an amount of the power consumption for each electric apparatus 30 provided by the electric power measurement device 40 from the control device 100, thereby updating the power consumption storage section 121. Then, the management server 4 automatically controls the electric apparatus 30 based on the storage unit 120. In addition, the management server 4 performs the changing of the above-described automatic mode when receiving the command for changing the automatic mode state from the user's terminal 3 or when receiving the command for changing the automatic mode state via the control device 100 and the gateway device 10 from the user's terminal 20.

Even if the management server 4 has the storage unit 120 and the control unit 130, the control device 100 may download a processing program realizing the operating control section 132 or various pieces of information stored in the storage unit 120 from the management server 4, thereby performing the automatic management or the changing the automatic mode of the electric apparatus 30.

In addition, as a second example, the electric apparatus 30 has the storage unit 120 and the control unit 130 illustrated in FIG. 2. In this case, all the electric apparatuses 30 have the storage unit 120 and the control unit 130. Then, each of the electric apparatuses 30 receives electric power data provided by the electric power measurement device 40 from the control device 100, thereby updating the power consumption storage section 121 held by the apparatus itself (electric apparatus 30). In addition, each of the electric apparatuses 30 automatically controls the apparatus itself (electric apparatus 30) based on the storage unit 120. In addition, when receiving the command for changing the automatic mode state from the user's terminal 20 or the user's terminal 3 via the control device 100, each of the electric apparatuses 30 updates the operation mode storage section 123 held by the apparatus itself (electric apparatus 30) similar to the changing of the automatic mode described above.

In the second example, when updating the operation mode storage section 123 held by the apparatus itself, the electric apparatus 30 notifies all other electric apparatuses 30 of an update of the operation mode storage section 123. For example, the electric apparatus 30₁ illustrated in FIG. 1 receives the command for changing the automatic mode state that disables the automatic mode of the electric apparatus 30₁ and updates the operation mode storage section 123 held by the apparatus itself (electric apparatus 30₁). In this case, the electric apparatus 30₁ notifies the control device 100 of disablement of the automatic mode of the electric apparatus 30₁. Then, the control device 100 transmits the notification from the electric apparatus 30₁ to the other electric apparatuses 30₂ and 30₃ besides the electric apparatus 30₁. Accordingly, the electric apparatus 30₂ updates the operation mode storage section 123 held by the apparatus itself (electric apparatus 30₂), and similarly, the electric apparatus 30₃ updates the operation mode storage section 123 held by the apparatus itself (electric apparatus 30₃). Accordingly, the state of the operation mode storage section 123 held by the electric apparatuses 30₁ to 30₃ can be synchronized.

In the above description, an example is given in which the electric apparatus 30 with the updated operation mode notifies other electric apparatuses 30 of the update of the automatic mode via the control device 100. However, the electric apparatus 30 with the updated operation mode may directly notify other electric apparatuses 30 of the update of the automatic mode without passing through the control device 100. Accordingly, the control system 1 can achieve reduction in a processing load in the control device 100 and a communication load between the electric apparatus 30 and the control device 100.

### Cutting Off

In addition, when changing the automatic mode to be disabled or enabled in at least one electric apparatus 30 based on the command for changing the automatic mode state that is received from the user's terminal 20, the above-referenced control device 100, 200 or 300 may cut off a control command or the command for changing the automatic mode state transmitted from the management server 4 from the processing subject during a predetermined period thereafter. The control device 100 will be described as an example. For example, the reception section 131 receives the command for changing the automatic mode state from the user's terminal 20. Then, the update section 133 updates the operation mode storage section 123 in accordance with the command for changing the automatic mode state received by the reception section 131. In this case, the control device 100 determines that a user is present in the home by directly receiving the command for changing the automatic mode state from the user' s terminal 20. Thereafter, the reception section 131 takes the control command that is directly transmitted from the user's terminal 20 and the command for changing the automatic mode state as the processing subjects. However, the control command and the command for changing the automatic mode state transmitted from the user's terminal 3 via the management server 4 are excluded from the processing subject. Accordingly, when a user is in the home, the control device 100 can cut off an unauthorized manipulation from outside.

### Operation Mode

In addition, according to the embodiments described above, examples are given in which the manipulation mode is in an enabled state at all times and the automatic mode is enabled or disabled. However, each embodiment described above can also be applied to a system in which either one of the manipulation mode or the automatic mode is enabled. In this case, in accordance with the command for changing the automatic mode state, the above-described control device 100, 200 or 300 performs switching the operation mode in each of the electric apparatuses 30 to either one of the manipulation mode or the automatic mode.

### Command for Changing Automatic Mode State

In addition, according to the embodiments described above, examples are given in which a user operates the user's terminal 20 and the like to transmit the command for changing the automatic mode state to the control device 100, 200 or 300. However, the control device 100 and the like are not required for receiving the command for changing the automatic mode state from the user's terminal 20. For example, the control device 100 and the like may be used to receive the command for changing the automatic mode state when detecting a predetermined voice from a user or a predetermined gesture of a user.

### Control command

In addition, according to the embodiments described above, examples are given in which the user's terminal 20 in the home transmits the control command to the control device 100, 200 or 300 so as to control the electric apparatus 30. However, the user's terminal 20 in the home may directly transmit the control command to the electric apparatus 30.

### Monitoring State of Electric Apparatus

In addition, even though the description is omitted in the above embodiments, the control device 100, 200 or 300 may regularly notify the user's terminal 20 and the user's terminal 3 of the operational state of the electric apparatus 30. At this time, the control device 100 and the like may notify the user's terminal 20 and the like of the operational state of only the electric apparatus 30 of which the automatic mode is enabled.

As described hereinbefore, according to the embodiments, it is possible that a user can flexibly change whether or not the electric apparatus disposed in the home is automatically managed.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A control system (1) comprising:
an electric apparatus (30) that operates in a first mode which is controlled based on an instruction from a user and in a second mode in which operational status is automatically managed; and
a control unit (130, 230, 330) that disables the second mode when receiving an instruction to disable the second mode and operates the electric apparatus (30) which operates in the first mode and the second mode, in the first mode.

2. The control system (1) according to claim 1,
wherein the control unit (130, 230, 330) enables the second mode when receiving an instruction to enable the second mode and operates the electric apparatus (30) in the first mode and the second mode.

3. The control system (1) according to claim 1 or 2,
wherein the electric apparatus (30) operates in the first mode with priority over the second mode when the second mode is enabled.

4. The control system (1) according to any one of claims 1 to 3, further comprising:
a plurality of the electric apparatuses (30),
wherein at least one or more second electric apparatuses (30) other than a first electric apparatus (30) among the plurality of electric apparatuses (30) operate in a state where the second mode is disabled or enabled similar to the first electric apparatus (30) when the second mode is disabled or enabled in the first electric apparatus (30) by the control unit (130, 230, 330).

5. The control system (1) according to any one of claims 1 to 3, further comprising:
a plurality of the electric apparatuses (30),
wherein at least one or more second electric apparatuses (30) other than a first electric apparatus (30) among the plurality of electric apparatuses (30) operate based on the operational status of the first electric apparatus (30) in a state where the second mode is enabled in the second electric apparatus (30) when the second mode is disabled in the first electric apparatus (30) by the control unit (130, 230, 330).

6. The control system (1) according to claim 4 or 5,
wherein the control unit (130, 230, 330) controls the state of the second electric apparatus (30) when the second mode is disabled or enabled in the first electric apparatus (30).

7. The control system (1) according to claim 4 or 5,
wherein the first electric apparatus (30) has the control unit (130, 230, 330), and
the control unit (130, 230, 330) directly transmits a notice of a change in the second mode to the second electric apparatus (30) to control the state of the second electric apparatus (30) when second mode is disabled or enabled in the first electric apparatus (30).

8. The control system (1) according to claim 6 or 7, further comprising:
a storage unit (220) that stores information indicating relevance to the plurality of electric apparatus (30),
wherein the control unit (130, 230, 330) controls the state of the second electric apparatus (30) that has a relationship with the first electric apparatus (30) based on the information which is stored in the storage unit (220) when the second mode is disabled or enabled in the first electric apparatus (30).

9. The control system (1) according to any one of claims 1 to 8,
wherein the electric apparatus (30) is disposed in a predetermined building, and
the control unit (130, 230, 330) cuts off an instruction that is transmitted from another user's terminal (3) which is located in a network outside the predetermined building after directly receiving the instruction to disable or enable the second mode from a user's terminal (20) used by the user.

10. The control system (1) according to any one of claims 1 to 9,
wherein the control unit (130, 230, 330) enables the second mode in the electric apparatus (30) after elapsing a predetermined period, since the second mode is disabled in the electric apparatus (30).

11. The control system (1) according to any one of claims 1 to 9,
wherein the control unit (130, 230, 330) enables the second mode in the electric apparatus (30) when power consumption reaches a predetermined value in the electric apparatus (30) after the second mode is disabled in the electric apparatus (30).

12. The control system (1) according to any one of claims 1 to 9,
wherein the control unit (130, 230, 330) enables the second mode in the electric apparatus (30) when an amount of power supplied in a predetermined area that is provided by an electric power company supplying electricity reaches a predetermined value.

13. The control system (1) according to any one of claims 10 to 12,
wherein the control unit (130, 230, 330) notifies the user of enablement of the second mode in the electric apparatus (30) when the second mode is enabled in the electric apparatus (30).
